# EUROPEAN PATENT APPLICATION

(11) **EP 3 943 789 A1**
(43) Date of publication of application: **26.01.2022**
(21) Application number: 21173465.2
(22) Date of filing: 12.05.2021
(51) Int. Cl.: F16K 15/14, F01P 11/02

(54) **SAFETY CAP**

(30) Priority: 20.07.2020 EP 20186785
(71) Applicant: Illinois Tool Works, Inc., Glenview, Illinois 60025 (US)
(72) Inventor: IAFRATE, Serge, Illinois, 60025 (US); COLLONGE, Yohan, Illinois, 60025 (US)
(74) Representative: HGF

(57) **Abstract**

The invention relates to a safety cap (300) for a fluid reservoir, said safety cap (300) being configured to be attached to a neck of said reservoir, said safety cap (300) comprising: a safety valve configured to regulate the pressure within the reservoir, the safety valve comprising: a valve body (302), configured to be in sealing arrangement with the neck of the reservoir; a sealing arrangement, comprising: a sealing member housing (304) having at least one passage extending therethrough; a first sealing member (3061); a flexible sealing member (3062), wherein in a sealing configuration a surface of the flexible sealing member engages with and forms a seal against a corresponding surface of the sealing member housing to seal the at least one passage; a biasing element (308) configured to bias the sealing arrangement into a sealing engagement with a portion of the valve body; wherein, the safety valve is configured such that when the pressure in the reservoir is above an upper threshold value, the sealing arrangement pushes against the biasing element (308) to move out of sealing engagement with the valve body; wherein, the safety valve is configured such that when the pressure in the reservoir is below a lower threshold, the flexible sealing member (3062) deforms away from the corresponding surface of the sealing member housing (304), breaking the seal therebetween and creating a flow path into the reservoir through the at least one passage in the sealing member housing (304).

## Description

The present invention relates to a safety cap, for example for use on an expansion tank or radiator of an automobile.

### Background

Safety caps are often used to regulate pressure within reservoirs - for example expansion tanks or radiators used as part of cooling circuits in an automobile.

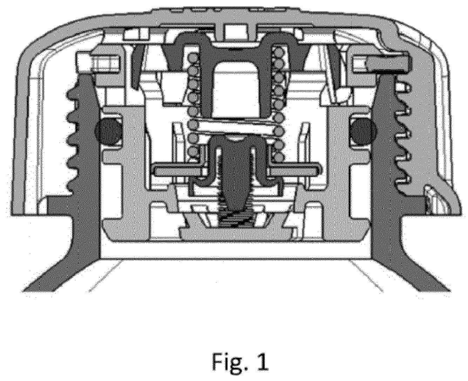

It is known that safety caps of this type generally comprise a body in which is disposed a valve held at the bottom of said body by means of a spring. The upper end of said spring abuts against a fixed element to thereby allow the valve to move vertically during an internal overpressure, until the internal pressure returns to normal. In the body of the valve is disposed a further valve containing a further spring which deforms during a depression in the tank, making it possible to restore the lack of pressure. The opening generated by the movement of the valve is achieved by the elasticity of the springs which compress as soon as the pressure in the circuit arrives at the critical conditions imposed by the manufacturer. A known safety cap is illustrated in Figure 1.

These safety plugs therefore make it possible, during a depression or an overpressure, to bring the cooling circuit down to the operating pressure prescribed by the manufacturer. Currently, safety conditions are around 1.4 bar + 15%, that is to say that the safety valve only becomes operational for pressures below or above these limits.

Known systems can be complicated and expensive. It is an aim of the present invention to provide a safety cap with reduced complexity without compromising on performance and reliability.

### Brief Summary

According to a first aspect of the present invention there is provided a safety cap for a fluid reservoir, said safety cap being configured to be attached to a neck of said reservoir, said safety cap comprising:
a safety valve configured to regulate the pressure within the reservoir, the safety valve comprising:
   a valve body, configured to be in sealing arrangement with the neck of the reservoir;
   a sealing arrangement, comprising:
      a sealing member housing having at least one passage extending therethrough;
      a first sealing member;
      a flexible sealing member, wherein in a sealing configuration a surface of the flexible sealing member engages with and forms a seal against a corresponding surface of the sealing member housing to seal the at least one passage;
      a biasing element configured to bias the sealing arrangement into a sealing engagement with a portion of the valve body;
   wherein, the safety valve is configured such that when the pressure in the reservoir is above an upper threshold value, the sealing arrangement pushes against the biasing element to move out of sealing engagement with the valve body;
   wherein, the safety valve is configured such that when the pressure in the reservoir is below a lower threshold, the flexible sealing member deforms away from the corresponding surface of the sealing member housing, breaking the seal therebetween and creating a flow path into the reservoir through the at least one passage in the sealing member housing.

According to an aspect of the invention, the first sealing member comprises a flexible gasket element.

According to an aspect of the invention, the first sealing member comprises an annular gasket element which surrounds the flexible sealing member.

According to an aspect of the invention, the flexible sealing member comprises an umbrella valve.

According to an aspect of the invention, the umbrella valve comprises a stem and a canopy portion, the stem of the umbrella valve extending upwardly into the sealing member housing.

According to an aspect of the invention, the sealing member housing includes two passages extending therethrough and wherein the canopy portion of the valve extends over the passages.

According to an aspect of the invention, the canopy portion of the valve is biased towards the passages.

The invention also relates to an assembly comprising:
a fluid reservoir having a neck portion; and
a safety cap according to the invention.

According to a second example of the invention, there is provided a safety cap for a fluid reservoir, said safety cap being configured to be attached to a neck of said reservoir, said safety cap comprising:
a safety valve configured to regulate the pressure within the reservoir, the safety valve comprising:
   a valve body, configured to be in sealing arrangement with the neck of the reservoir;
   a sealing arrangement, comprising:
      a sealing member housing having at least one passage extending therethrough; and
      a flexible sealing member, comprising at least one opening extending therethrough, wherein in a sealing configuration a surface of the flexible sealing member engages with and forms a seal against a corresponding surface of the sealing member housing to seal the at least one passage and the at least one opening;
   a biasing element configured to bias the sealing arrangement into a sealing engagement with a portion of the valve body;
wherein, the safety valve is configured such that when the pressure in the reservoir is above an upper threshold value, the sealing arrangement pushes against the biasing element to move out of sealing engagement with the valve body;
wherein, the safety valve is configured such that when the pressure in the reservoir is below a lower threshold, the flexible sealing member deforms away from the corresponding surface of the sealing member housing, breaking the seal therebetween and creating a flow path into the reservoir through the at least one passage in the sealing member housing and the at least one opening in the sealing member.

Aptly, the flexible sealing member comprises a flexible gasket element.

Aptly the at least one opening comprises a slit.

According to an aspect of the invention, the flexible sealing member comprises a radially outer portion and a radially inner portion, wherein the at least one opening is positioned between the radially outer portion and the radially inner portion.

According to an aspect of the invention, three openings defined between three connecting portions.

According to an aspect of the invention, the openings are arc shaped or substantially circular sectors.

Examples of the present invention will now be described hereinafter, by way of example only, with reference to the accompanying drawings in which:
Figure 1 illustrates a side cross-sectional view of a known safety cap;
Figure 2 illustrates a side cross-sectional view of an example of a safety cap

In the drawings like reference numerals refer to like parts.

### Detailed Description

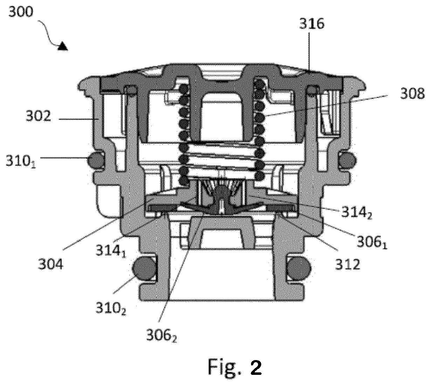

Figure 2 illustrate examples of safety caps for a fluid reservoir. The reservoir may be, for example, an expansion tank or radiator of an automobile. The reservoir may be, for example, part of a cooling circuit for an automobile. In general, the safety cap is configured to be attached or fixed to a neck of the reservoir.

Figure 2 illustrate an example of a safety cap 300. The safety cap 100 includes a safety valve.

The safety valve includes a valve body 302, configured to be in sealing arrangement with a neck of reservoir. In this example, annular sealing elements 310_{1,2} are provided around the valve body 302 to provide a seal between the safety cap 300 and the neck of the reservoir (not shown).

In this example, the valve body 302 includes a seat portion 312. In this example the seat portion 312 is a raised annular portion, or ridge, located within an interior of the valve body 302.

The safety valve further includes a sealing arrangement located within an interior of the valve body 302. The sealing arrangement includes a sealing member housing 304. The sealing member housing 304 includes a recessed portion configured to receive a sealing member.

The sealing member housing 304 includes at least one passage extending therethrough. In this example the sealing member housing 304 includes two passages 314_{1,2} extending therethrough. Of course, according to other aspects of the invention, the sealing member may comprise only one passage. It may also comprise any number of passages. That is, the passages 314_{1,2} extends from a first side of the sealing member housing 304 (for example an upper side) to a second side of the sealing member housing 304 (for example a lower side).

In this example, the sealing arrangement further includes a flexible sealing member 306₂. In this example, the sealing arrangement further includes a first sealing member 306₁ which is for instance a flexible gasket element. The flexible gasket element is for instance a thin annular gasket element which surrounds the flexible sealing member. Such gasket is for instance configured to be received within the recessed portion the sealing member housing 304.

The flexible sealing member 306₂ and the first sealing member forms at least one opening extending therethrough.

The safety valve is configured to regulate the pressure within the reservoir. In particular, the safety valve is configured to help address over- or under-pressure situations within the reservoir.

Figure 2 illustrates the safety valve in an equilibrium position. That is, Figure 2 illustrates the safety valve when the pressure within the reservoir is at an acceptable level where regulation is not required. When the safety valve is in the equilibrium position, the sealing arrangement is in a sealing configuration. In general, in the sealing configuration the sealing arrangement prevents fluid passing from the reservoir, through the interior of the valve body 302 to the environment (and likewise from the environment into the reservoir).

In the sealing configuration a surface of the flexible sealing member 306₂ engages with and forms a seal against a corresponding surface of the sealing member housing 104 to seal the passages 314_{1,2}.

In the illustrated example, an upper surface of the flexible sealing member 306₂ abuts a lower surface of the sealing member housing 304. The passages 314_{1,2} of the sealing member housing 304 are covered by the upper surface of the flexible sealing member 306₂. As such passage of fluid through the passages 314_{1,2} are blocked.

The safety valve further includes a biasing element 308 configured to bias the sealing arrangement into a sealing engagement with a portion of the valve body 302. In this example, the biasing element 308 biases the sealing arrangement downwardly towards the seat portion 312. As such, the first sealing member 306₁ engages with and forms a seal against the seat portion 312.

In this example the biasing element 308 is a spring. In this example, the spring 308 pushes against frame element 316, which itself is fixed with respect to the valve body 302.

In this example the seat portion 312 is positioned so as to engage with a radially outer portion of the first sealing member 306₁. The engagement between the first sealing member 306₁ prevents passage of fluid around the sealing arrangement (that is, between a side of the sealing arrangement and the surrounding interior surface of the valve body 302).

The safety valve is configured such that when the reservoir becomes over-pressurised (that is, the pressure in the reservoir rises above an upper threshold value), the sealing arrangement pushes against the biasing element (spring) 308 to move out of sealing engagement with the valve body 302 (the sealing arrangement compresses the spring 308 and moves out of sealing engagement with the valve body 302).

In this example the sealing arrangement moves away from the seat portion 312 to allow the passage of fluid from the reservoir around the sealing arrangement. The fluid can subsequently be vented so as to reduce the pressure within the reservoir. The sealing arrangement pushes against the spring 308 to allow venting until the internal pressure returns to an acceptable level (i.e. below the upper threshold value).

Conversely, if the reservoir becomes de-pressurised or suffers a depression event (that is, the pressure in the reservoir falls below a lower threshold value), the flexible sealing member 306₂ deforms away from the corresponding surface of the sealing member housing 304, breaking the seal therebetween and creating a flow path into the reservoir through the at least one passage in the sealing member housing 304. It allows fluid to pass into the reservoir through the passages 314_{1,2} in the sealing member housing 304.

Put another way, the canopy of the flexible sealing member 306₂ flexes away from the lower surface of the sealing member housing 304. This creates a gap therebetween, or more particularly a flow path from the passages 314_{1,2} to the reservoir. As such, the pressure in the reservoir can be raised. The flexible sealing member 306₂ remains is deformed until the internal pressure returns to an acceptable level.

In this example the sealing arrangement includes two sealing members - a first sealing member 306₁ and a flexible sealing member 306₂. In this example, the first sealing member 306₁ includes an annular gasket element. The flexible sealing member 306₂ is an umbrella valve. The first sealing member 306₁ surrounds the umbrella valve 306₂. In this example the biasing element 308 biases the first sealing member 306₁ into sealing engagement with the seat portion 312.

In this example, the sealing member housing includes two passages 314_{1,2} extending therethrough. As with the previous examples, in a sealing configuration a surface of the umbrella valve 306₂ engages with and forms a seal against a corresponding surface of the sealing member housing 304 to seal the passages 314_{1,2}. In this example, the stem of the umbrella valve extends upwardly into the sealing member housing 304, with the canopy portion of the valve extending over the passages 314_{1,2}. The canopy portion of the valve is biased towards the passages 314_{1,2}.

The safety cap 300 works in the same manner as previous examples during an overpressure situation. In a depression situation, the canopy portion of the umbrella valve 306₂ deforms away from the corresponding surface of the sealing member housing 304, breaking the seal therebetween and allowing fluid to pass into the reservoir through the passages 314_{1,2} in the sealing member housing. In effect, deformation of the canopy portion of the umbrella valve 306₂ creates a gap between the umbrella valve 306₂ and the first sealing member 306₁ that forms opening between the first sealing member 306₁ and the umbrella valve 306₂. That is a flow path is created between the first sealing member 306₁ and the umbrella valve 306₂.

### Advantages

In the described examples, a seal is created between surfaces of the sealing member and the sealing member housing. The contact between these surfaces covers a substantial amount of said surfaces helping ensure a tight seal.

In addition, the fluid passage from the environment into the reservoir (in the event of a depressurisation event) is created through the deformation of the flexible sealing member as a whole (rather than relative deformation within the flexible sealing member itself, for example a flap portion in the flexible sealing member). This creates a more reliable seal that is less likely to degrade over time. That is, the at least one opening is always present in the flexible sealing member, but is covered and sealed through contact with the sealing member housing when the pressure within in the reservoir is acceptable.

It will be clear to a person skilled in the art that features described in relation to any of the embodiments described above can be applicable interchangeably between the different embodiments.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A safety cap (300) for a fluid reservoir, said safety cap (300) being configured to be attached to a neck of said reservoir, said safety cap (300) comprising:
a safety valve configured to regulate the pressure within the reservoir, the safety valve comprising:
a valve body (302), configured to be in sealing arrangement with the neck of the reservoir;
a sealing arrangement, comprising:
a sealing member housing (304) having at least one passage extending therethrough;
a first sealing member (306₁);
a flexible sealing member (306₂), wherein in a sealing configuration a surface of the flexible sealing member engages with and forms a seal against a corresponding surface of the sealing member housing to seal the at least one passage;
a biasing element (308) configured to bias the sealing arrangement into a sealing engagement with a portion of the valve body;
wherein, the safety valve is configured such that when the pressure in the reservoir is above an upper threshold value, the sealing arrangement pushes against the biasing element (308) to move out of sealing engagement with the valve body;
wherein, the safety valve is configured such that when the pressure in the reservoir is below a lower threshold, the flexible sealing member (306₂) deforms away from the corresponding surface of the sealing member housing (304), breaking the seal therebetween and creating a flow path into the reservoir through the at least one passage in the sealing member housing (304).

2. A safety cap according to claim 1, wherein the first sealing member (306₁) comprises a flexible gasket element.

3. A safety cap according to any of claims 1 or 2, wherein the first sealing member (306₁) comprises an annular gasket element which surrounds the flexible sealing member.

4. A safety cap according to any of the preceding claims, wherein the flexible sealing member comprises an umbrella valve (306₂).

5. A safety cap according to claim 4, wherein the umbrella valve comprises a stem and a canopy portion, the stem of the umbrella valve extending upwardly into the sealing member housing (304)

6. A safety cap according to claim 5, wherein the sealing member housing includes two passages (314_{1,2}) extending therethrough and wherein the canopy portion of the valve extends over the passages (314_{1,2}).

7. A safety cap according to claim 6, wherein the canopy portion of the valve is biased towards the passages (314_{1,2}).

8. An assembly comprising:
a fluid reservoir having a neck portion; and
a safety cap according to any preceding claim.
